# EUROPEAN PATENT APPLICATION

(11) **EP 4 372 058 A1**
(43) Date of publication of application: **22.05.2024**
(21) Application number: 22841750.7
(22) Date of filing: 31.03.2022
(51) Int. Cl.: C09D 5/00, C09D 5/08, C08F 220/06, C08F 220/14, C08F 220/22, C09D 133/16, C09K 3/18, C09D 7/20

(54) **FLUORINE-CONTAINING COPOLYMER AND SURFACE-MODIFIED SUBSTRATE USING SAME**

(30) Priority: 12.07.2021 JP 2021114759
(71) Applicant: Unimatec Co., Ltd., Tokyo 105-0012 (JP)
(72) Inventor: KIJIMA Tetsushi, Kitaibaraki-shi, Ibaraki 319-1544 (JP); HAYASHI Hideki, Kitaibaraki-shi, Ibaraki 319-1544 (JP)
(74) Representative: Kraus & Lederer PartGmbB
(86) International application number: PCT/JP2022/016645
(87) International publication number: WO 2023/286402

(57) **Abstract**

A fluorine-containing copolymer, which is obtained by copolymerizing, as copolymer units, (A) the general formula:

CₙF₂ₙ₊₁(CH₂CF₂)ₐ(CF₂CF₂)_{b}(CH₂CH₂)_{c}OCOCR=CH₂

wherein R is a hydrogen atom or a methyl group, n is 1 to 6, a is an integer of 1 to 4, b is 1 to 3, and c is 1 to 3; (B) the general formula: CH₂=CRCOOR¹ wherein R is a hydrogen atom or a methyl group, and R¹ is a C₁-C₃₀ linear, branched, or cyclic hydrocarbon group that may contain an oxygen atom; (C) the general formula:

CH₂=CRCOO(H)ₚ(R²Y)_{q}

wherein R is a hydrogen atom or a methyl group, p and q are 0 or 1, p + q is 1, R² is a C₁-C₃₀ linear, branched, or cyclic divalent hydrocarbon group that may have an oxygen atom, and Y is a phosphate group; and (D) the general formula:

CH₂ =CRCOOR³ OCOCR=CH₂

wherein R is a hydrogen atom or a methyl group, R³ is a C₁-C₃₀ linear, branched, or cyclic divalent hydrocarbon group that may contain an oxygen atom,
at a ratio of 1 to 50 wt.% of the component (B), 0.01 to 5 wt.% of the component (C) and 0.01 to 2 wt.% of the component (D). The fluorine-containing copolymer gives a substrate surface modied film having excellent water and oil repellency, rust resistance, and the like.

## Description

### TECHNICAL FIELD

The present invention relates to a fluorine-containing copolymer and a surface-modified substrate using the same. More particularly, the present invention relates to a fluorine-containing copolymer, that can give a surface modification film having excellent water and oil repellency, rust resistance, and the like, and a surface-modified substrate using the same.

### BACKGROUND ART

As a fluorine-containing polymer comprising a copolymer of a polyfluoroalkyl alcohol (meth)acrylic acid derivative having a perfluoroalkyl group with C₆ or less, considered to have a low bioaccumulation potential, and a surface modifier comprising the same, the present applicant has previously proposed a fluorine-containing copolymer comprising at least one copolymer of
(A) a polyfluoroalkyl alcohol (meth)acrylic acid derivative

   CₙF₂ₙ₊₁(CH₂CF₂)ₐ(CF₂CF₂)_{b}(CH₂CH₂)_{c}OCOCR=CH₂

   R: H or methyl group
   n: 1 to 6
   a: 1 to 4
   b: 1 to 3
   c: 1 to 3
(B) a (meth)acrylic acid ester

   CH₂=CRCOOR³

   R: H or methyl group
   R³: alkyl group or aralkyl group

      CH₂=CRCOOR⁴Y
   R: H or methyl group
   R⁴: alkylene group
   Y: crosslinkable functional group

      CH₂=CRCOO(R⁵O)₁R⁶
   R: H or methyl group
   R⁵: alkylene group
   R⁶: H, alkyl group or aromatic group
   l: 1 to 50
and a surface modifier comprising the same as an active ingredient (Patent Document 1).

It is described that in the fluorine-containing polymer, a polyfunctional monomer, such as ethylene glycol di(meth)acrylate, may be copolymerized at a ratio of 10 wt.% or less; however, as shown in Comparative Example 1, provided later, when 2.33 wt.% of ethylene glycol dimethacrylate was copolymerized, the reaction product turned into a gel and was not obtained as a copolymer solution.

### PRIOR ART DOCUMENTS

### PATENT DOCUMENTS

Patent Document 1 : JP-A-2014-172952
Patent Document 2 :WO 2018/084086 A1
Patent Document 3 :WO 2009/034773 A1

### OUTLINE OF THE INVENTION

### PROBLEM TO BE SOLVED BY THE INVENTION

The present invention provides a fluorine-containing copolymer that is obtained as a copolymer solution and that can solve the difficulty of giving a surface-modified film having excellent water and oil repellency, rust resistance, and the like, and also provides a surface-modified substrate using the same.

### MEANS FOR SOLVING THE PROBLEM

The above primary object of the present invention can be achieved by the following fluorine-containing copolymer, which is obtained by copolymerizing, as copolymer units,
(A) a polyfluoroalkyl (meth)acrylic acid ester represented by the general formula:

   CₙF₂ₙ₊₁(CH₂CF₂)ₐ(CF₂CF₂)_{b}(CH₂CH₂)_{c}OCOCR=CH₂ [I]

   wherein R is a hydrogen atom or a methyl group, n is an integer of 1 to 6, a is an integer of 1 to 4, b is an integer of 1 to 3, and c is an integer of 1 to 3;
(B) a (meth)acrylic acid ester represented by the general formula:

   CH₂=CRCOOR¹ [II]

   wherein R is a hydrogen atom or a methyl group, and R¹ is a C₁-C₃₀ linear, branched, or cyclic hydrocarbon group that may contain an oxygen atom;
(C) a functional group-containing (meth)acrylic acid or an ester thereof represented by the following general formula:

   CH₂=CRCOO(H)ₚ(R²Y)_{q} [III]

   wherein R is a hydrogen atom or a methyl group, p and q are 0 or 1, p + q is 1, R² is a C₁-C₃₀ linear, branched, or cyclic divalent hydrocarbon group that may have an oxygen atom, and Y is a phosphate group; and
(D) a polyfunctional (meth)acrylic acid ester represented by the following general formula:

   CH₂ =CRCOOR³ OCOCR=CH₂ [IV]

wherein R is a hydrogen atom or a methyl group, R³ is a C₁-C₃₀ linear, branched, or cyclic divalent hydrocarbon group that may contain an oxygen atom,
at a ratio of 1 to 50 wt.% of the component (B), 0.01 to 5 wt.% of the component (C) and 0.01 to 2 wt.% of the component (D). Here, the term "(meth)acrylic acid" refers to an acrylic acid or a methacrylic acid.

Further, the second object of the present invention can be achieved by a surface-modified substrate on which a surface-modified film is formed from a coating composition comprising the fluorine-containing copolymer and its solvent.

### EFFECT OF THE INVENTION

The fluorine-containing copolymer of the present invention, in which a polyfunctional (meth)acrylic acid ester is used as an essential copolymer unit and the copolymerization ratio thereof is 2 wt.% or less in the copolymer, forms a uniform coating composition with its solvent.

The surface-modified film formed from this coating composition on a substrate is excellent in water and oil repellency, rust resistance, inhibition of rust spreading from scratches, moisture resistance, and the like.

A rust inhibitor comprising, as an active ingredient, a fluorine-containing polymer consisting of the above [I], [II], and [III] is also described in Patent Document 2; however, as shown by the comparison of Example 1 to Comparative Example 3, provided later, the use of a specific small amount of the above [IV] as an essential component of the fluorine-containing polymer further improves water and oil repellency and inhibition of rust spreading from scratches.

### EMBODIMENTS FOR CARRYING OUT THE INVENTION

Examples of the polyfluoroalkyl alcohol (meth)acrylic acid derivative [I] which represents component (A) include the following compounds, as shown in Patent Document 3, and their corresponding methacrylic acid derivatives:

| | |
|---|---|
| C₂F₅(CH₂CF₂)(CF₂CF₂)(CH₂CH₂)OCOCH=CH₂ | C₄F₉(CH₂CF₂)(CF₂CF₂)(CH₂CH₂)OCOCH=CH₂ |
| C₂F₅(CH₂CF₂)(CF₂CF₂)(CH₂CH₂)₂OCOCH=CH₂ | C₄F₉(CH₂CF₂)(CF₂CF₂)(CH₂CH₂)₂OCOCH=CH₂ |
| C₂F₅(CH₂CF₂)(CF₂CF₂)₂(CH₂CH₂)OCOCH=CH₂ | C₄F₉(CH₂CF₂)(CF₂CF₂)₂(CH₂CH₂)OCOCH=CH₂ |
| C₂F₅(CH₂CF₂)(CF₂CF₂)₂(CH₂CH₂)₂OCOCH=CH₂ | C₄F₉(CH₂CF₂)(CF₂CF₂)₂(CH₂CH₂)₂OCOCH=CH₂ |
| C₂F₅(CH₂CF₂)(CF₂CF₂)₃(CH₂CH₂)OCOCH=CH₂ | C₄F₉(CH₂CF₂)(CF₂CF₂)₃(CH₂CH₂)OCOCH=CH₂ |
| C₂F₅(CH₂CF₂)(CF₂CF₂)₃(CH₂CH₂)₂OCOCH=CH₂ | C₄F₉(CH₂CF₂)(CF₂CF₂)₃(CH₂CH₂)₂OCOCH=CH₂ |
| C₂F₅(CH₂CF₂)₂(CF₂CF₂)(CH₂CH₂)OCOCH=CH₂ | C₄F₉(CH₂CF₂)₂(CF₂CF₂)(CH₂CH₂)OCOCH=CH₂ |
| C₂F₅(CH₂CF₂)₂(CF₂CF₂)(CH₂CH₂)₂OOOCH=CH₂ | C₄F₉(CH₂CF₂)₂(CF₂CF₂)(CH₂CH₂)₂OCOCH=CH₂ |
| C₂F₅(CH₂CF₂)₂(CF₂CF₂)₂(CH₂CH₂)OCOCH=CH₂ | C₄F₉(CH₂CF₂)₂(CF₂CF₂)₂(CH₂CH₂)OCOCH=CH₂ |
| C₂F₅(CH₂CF₂)₂(CF₂CF₂)₂(CH₂CH₂)₂OCOCH=CH₂ | C₄F₉(CH₂CF₂)₂(CF₂CF₂)₂(CH₂CH₂)₂OCOCH=CH₂ |
| C₂F₅(CH₂CF₂)₂(CF₂CF₂)₃(CH₂CH₂)OCOCH=CH₂ | C₄F₉(CH₂CF₂)₂(CF₂CF₂)₃(CH₂CH₂)OCOCH=CH₂ |
| C₂F₅(CH₂CF₂)₂(CF₂CF₂)₃(CH₂CH₂)₂OCOCH=CH₂ | C₄F₉(C H₂CF₂)₂(CF₂CF₂)₃(CH₂CH₂)₂OCOCH=CH₂ |

The polyfluoroalkyl alcohol (meth)acrylic acid derivative can be used alone as a fluorine-containing polymerizable monomer that is one side of the monomers; however, the derivative can be also used in combination with the other fluorine-containing polymerizable monomer, which is constituted as a part of the derivative, specifically in an amount within a range of about 30 wt.% or less in the total amount of fluorine-containing polymerizable monomers.

As the other polymerizable fluorine-containing monomer, those represented by the general formula are used:

CH₂=CRCOOR⁴(NR⁵SO₂)ₘRf [V]

R: hydrogen atom or methyl group
R⁴: C₁-C₆ linear or branched alkylene group
R⁵: C₁-C₄ lower alkyl group
Rf: C₁-C₆ perfluoroalkyl group
m: 0 or 1

Examples of them include the following polyfluoroalkyl group-containing (meth)acrylate monomers.

CH₂=CHCOOCH₂CₙF₂ₙH

CH₂=C(CH₃)COOCH₂CₙF₂ₙH

CH₂=CHCOOCH₂CₙF₂ₙ₊₁

CH₂=C(CH₃)COOCH₂CₙF₂ₙ₊₁

CH₂=CHCOOC₂H₄CₙF₂ₙ₊₁

CH₂=C(CH₃)COOC₂H₄CₙF₂ₙ₊₁

CH₂=CHCOOC₃H₆CₙF₂ₙ₊₁

CH₂=C(CH₃)COOC₃H₆CₙF₂ₙ₊₁

CH₂=CHCOOC₄H₈CₙF₂ₙ₊₁

CH₂=C(CH₃)COOC₄H₈CₙF₂ₙ₊₁

CH₂=CHCOOC₂H₄N(CH₃)SO₂CₙF₂ₙ₊₁

CH₂=C(CH₃)COOC₂H₄N(CH₃)_{S}O₂CₙF₂ₙ₊₁

CH₂=CHCOOC₂H₄N(C₂H₅)SO₂CₙF₂ₙ₊₁

CH₂=C(CH₃)COOC₂H₄N(C₂H₅)SO₂CₙF₂ₙ₊₁

CH₂=CHCOOC₂H₄N(C₃H₇)SO₂CₙF₂ₙ₊₁

CH₂=C(CH₃)COOC₂H₄N(C₃H₇)SO₂CₙF₂ₙ₊₁

CH₂=CHCOOC₂H₄CₙF₂ₙCF(CF₃)₂

CH₂=C(CH₃)COOC₂H₄CₙF₂ₙCF(CF₃)₂

As the fluorine atom-free polymerizable monomers that are copolymerized with the polyfluoroalkyl alcohol (meth)acrylic acid derivative [I] or with this derivative and the other fluorine-containing polymerizable monomer [V], the (meth)acrylic acid esters represented by the general formulas [II], [III], and [IV] described above are used.

As the (meth)acrylic acid ester which represents the component (B) and represented by the general formula [II], for example, acrylic acid esters or methacrylic acid esters esterified with an alkyl group, such as methyl, ethyl, propyl, isopropyl, n-butyl, n-hexyl, 2-ethylhexyl, n-octyl, lauryl, and stearyl, a cycloalkyl group such as cyclohexyl, and an aralkyl group such as benzyl are used. Further, R¹ in the component (B) may contain an oxygen atom.

As the (meth)acrylic acid ester which represents the component (C) and represented by the general formula [III] in addition to (meth)acrylic acids for example, (meth)acrylates having a phosphate group, such as 2-(meth)acryloyloxy methyl acid phosphate, 2-(meth)acryloyloxy ethyl acid phosphate, and 2-(meth)acryloyloxy ethyl acid phosphate are used. Further, R² in the component (C) may contain an oxygen atom.

As the (meth)acrylic acid ester which represents the component (D) and represented by the general formula [IV], for example, ethyleneglycol di(meth)acrylate, propyleneglycol di(meth)acrylate, 1,4-butanediol di(meth)acrylate, 1,6-hexanediol di(meth)acrylate, 1,9-nonanediol di(meth)acrylate, neopentylglycol di(meth)acrylate, tetraethyleneglycol di(meth)acrylate, tripropyleneglycol di(meth)acrylate, polypropyleneglycol di(meth)acrylate, bisphenol A ethylene oxide adduct diacrylate, dimethylol tricyclodecane diacrylate, glycerin methacrylate acrylate, and 3-acryloyloxy glycerin monomethacrylate are used. Further, R³ of the component (D) may contain an oxygen atom.

As for these functional group-containing (meth)acrylic acid esters, in the fluorine-containing copolymer, the component (B) is contained at a ratio of about 1 to 50 wt.%, preferably about 10 to 40 wt.%, the component (C) is contained at a ratio of about 0.01 to 5 wt.%, preferably about 0.1 to 2 wt.%, and the component (D) is contained at a ratio of about 0.01 to 2 wt.%, preferably about 0.1 to 2 wt.%. If the component (D) is contained at a ratio greater than this range, the copolymerization reaction product is gelled.

In the polymerization reaction, from the viewpoint of handling convenience, the polymerization reaction is preferably performed in an organic solvent comprising at least one of fluorine-based organic solvent such as 1,4-bis(trifluoromethyl)benzene, 1,1,1,2,2-pentafluoro-3,3-dichloropropane, 1,1,2,2,3-pentafluoro-1,3-dichloropropane, 1,1,1,2,3,4,4,5,5,5-decafluoropentane and perfluorohexane.

As an initiator used at about 0.1 to 4 wt.%, preferably about 0.5 to 2 wt.%, based on the total amount of the comonomers, diacyl peroxide, peroxycarbonate, peroxyester, or the like, is used. Specific examples thereof include organic peroxides, such as isobutyryl peroxide, lauroyl peroxide, stearoyl peroxide, succinic acid peroxide, bis(heptafluorobutyryl) peroxide, pentafluorobutyroyl peroxide, bis(4-tert-butylcyclohexyl) peroxy dicarbonate, di-n-propyl peroxy dicarbonate, and diisopropyl peroxy dicarbonate. Depending on the polymerization method, an azo compound, inorganic peroxide, or a redox system thereof can also be used. Depending on the reaction conditions and the composition ratio, the polymerization reaction may hardly progress; in that case, the polymerization initiator may be added again during the polymerization reaction.

Further, a chain transfer agent can be used, if necessary, to adjust the molecular weight. Examples of the chain transfer agent include dimethyl ether, methyl t-butyl ether, C₁-C₆ alkanes, methanol, ethanol, 2-propanol, cyclohexane, carbon tetrachloride, chloroform, dichloromethane, methane, ethyl acetate, ethyl malonate, acetone, and the like.

The copolymerization reaction is performed using such a reaction solvent, a reaction initiator, etc., at a reaction temperature of about 0 to 100°C, preferably about 5 to 70°C, particularly preferably about 40 to 70°C. After completion of the reaction, a copolymer solution having a solid matters content of about 5 to 30 wt.% is obtained. The solvent is removed from this reaction mixture, thereby obtaining a fluorine-containing copolymer.

When the remaining unreacted comonomers were analyzed by gas chromatography, it was confirmed that the polyfluoroalkyl alcohol (meth)acrylic acid derivative copolymer [I] used in the copolymerization reaction was almost completely copolymerized.

The method for producing a copolymer of the polyfluoroalkyl alcohol (meth)acrylic acid derivative is not limited to the above solution polymerization method, and, for example, suspension polymerization method or emulsion polymerization method using water as the dispersion medium in the presence of a nonionic surfactant and/or a cationic surfactant may be employed.

The thus prepared copolymer of the polyfluoroalkyl alcohol (meth)acrylic acid derivative is isolated by a method of evaporation to dryness or aggregation by adding a flocculant such as an inorganic salt, and purified by washing with a solvent or the like. The weight average molecular weight Mw of the resulting copolymer is indicated by high-performance liquid chromatography method, and its value is about 2,000 to 20,000,000.

The polymer solution prepared by the solution polymerization method is further diluted with a fluorine-based organic solvent such as 1,4-bis(trifluoromethyl)benzene or 1,3-bis(trifluoromethyl)benzene, preferably with the same fluorine-containing organic solvent as that used in the polymerization reaction, so that the solid matters content is about 0.01 to 30 wt.%, preferably about 0.05 to 5 wt.%, thereby constituting a coating composition, which is then used as a surface modifier. Regarding the polymerization product prepared by aqueous emulsion polymerization method or suspension polymerization method, they can be also prepared using the polymerization product as an aqueous dispersion directly or after diluted with water to a solid matters content of about 0.1 to 10 wt.%, or as an aqueous dispersion or an organic solvent solution by adding a flocculant to the polymerization reaction solution for aggregating the polymerization product and dispersing in water or dissolving in a fluorine-based organic solvent the copolymer isolated by washing the polymerization product with water or an organic solvent. The aqueous dispersion preferably containing a surfactant and a water soluble organic solvent in a concentration of 20 wt.% or less is used. This aqueous dispersion or organic solvent solution can be also used as, for example, a surface modifier such as a water- and oil-repellent or an oil barrier.

To the coating composition composed of the aqueous dispersion or fluorine-based organic solvent solution of the copolymer other additives that are necessary for the surface modifier purpose, for example, a cross-linking agent such as a melamine resin, a urea resin, or a blocked isocyanate; a polymer extender; other water repellent such as a silicone resin or oil, or a wax; an insecticide; an antistatic agent; a dye stabilizer; a crease preventing agent; and a stain blocker can be further added.

The surface modifier obtained in the above manner is effectively applied as a water and oil repellent, a rust inhibitor, or the like to substrates, such as metal, paper, films, fibers, fabrics, woven fabrics, carpets, or fabric products made from filaments, fibers, threads, etc.

As the method for applying the coating composition to these substrates; coating, dipping, spraying, padding, roll coating, or a combination of these methods is generally used. For example, a bath having a solid matters content adjusted to about 0.1 to 10 wt.% can be used as a pad bath. A material to be treated is padded in this pad bath, and the excess liquid is then removed by a squeezing roll, followed by drying to achieve attachment so that the amount of the polymer attached to the material to be treated is about 0.01 to 10 wt.%, thereby forming a surface-modified film. Thereafter, although it depends on the type of material to be treated, drying is generally performed at a temperature of about 100 to 200°C for about 1 minute to about 2 hours, and the water and oil repellent treatment, rust prevention treatment, etc. are completed.

As a result, a water and oil repellent substrate, a rust resistant substrate, a rust resistant coating substrate, and the like that have a surface-treated film formed from the coating composition are formed.

### EXAMPLES

The following describes the present invention in more detail with reference to Examples. The present invention, including the effects thereof, are not limited to these Examples.

### Example 1

In a 300 ml reaction vessel equipped with a condenser, 69.1 g (86.35 wt.%) of CF₃(CF₂)₃(CH₂CF₂)(CF₂CF₂)₂(CH₂CH₂)OCOCH=CH₂ (fluorine monomer A), 10.1 g (12.62 wt.%) of methyl methacrylate (MMA), 0.38 g (0.48 wt.%) of methacrylic acid (MAA), 0.44 g (0.55 wt.%) of ethylene glycol dimethacrylate (EGDMA), 140.6 g of C₄F₉OC₂H₅ (Novec 7200, produced by 3M), and 60.3 g of 1,3-bis(trifluoromethyl)benzene were charged. Replacement with nitrogen gas was performed for 30 minutes while stirring. After further adding 0.42 g of azobisisobutyronitrile (AIBN) to the reaction vessel, the temperature inside the reaction vessel was gradually raised to 68°C, and the copolymerization reaction was carried out at this temperature for 21 hours while stirring.

After completion of the reaction, the resultant was cooled down to obtain a colorless, transparent, highly viscous copolymer solution. By analyzing the unreacted residual comonomers using gas chromatography, it was confirmed that all of the comonomers used in the copolymerization reaction had undergone the copolymerization reaction at a conversion rate of 99% or more.

### Example 2

In Example 1, the amount of EGDMA was changed to 1.6 g (1.97 wt.%), and it was confirmed that all of the comonomers had undergone the copolymerization reaction at a conversion rate of 99% or more.

### Example 3

In Example 1, 10.1 g (12.62 wt.%) of benzyl methacrylate (BzMA) was used in place of MMA, and it was confirmed that all of the comonomers had undergone the copolymerization reaction at a conversion rate of 99% or more.

### Example 4

In Example 1, 69.1 g (86.59 wt.%) of CF₃(CF₂)₃(CH₂CF₂)(CF₂CF₂)₂(CH₂CH₂)OCOC(CH₃)=CH₂ was used in place of fluorine monomer A, and it was confirmed that all of the comonomers had undergone the copolymerization reaction at a conversion rate of 99% or more.

### Example 5

In Example 1, 0.38g (0.48wt.%) of 2-methacryloyloxyethyl acid phosphate (P-1M, produced by Kyoeisha Chemical Co., Ltd.) was used in place of MAA, the amount of C₄F₉OC₂H₅ was changed to 112.5g, the amount of 1,3-bis(trifluoromethyl)benzene was changed to 48.2g, and 40.2g of isopropyl alcohol (IPA) was used. It was confirmed that all of the comonomers had undergone the copolymerization reaction at a conversion rate of 99% or more.

### Comparative Example 1

In Example 1, the amount of EGDMA was changed to 1.9 g (2.33 wt.%); however, a gel was formed in the reaction vessel after 21 hours, and no copolymer solution was obtained.

### Comparative Example 2

In Example 1, MAA was not used, and it was confirmed that all of the comonomers had undergone the copolymerization reaction at a conversion rate of 99% or more.

### Comparative Example 3

In Example 1, EGDMA was not used, and it was confirmed that all of the comonomers had undergone the copolymerization reaction at a conversion rate of 99% or more.

### Comparative Example 4

In Example 1, MAA and EGDMA were not used, and it was confirmed that all of the comonomers had undergone the copolymerization reaction at a conversion rate of 99% or more.

Using the copolymer solutions obtained in the Examples and Comparative Examples 2 to 4, contact angle measurement, rust resistance evaluation and moisture resistance measurement (only Example 1) were carried out.

### [Contact Angle Measurement]

C₄F₉OC₂H₅ and 1,3-bis(trifluoromethyl)benzene were added to each copolymer solution, the mixture was diluted to a solid matters content of 2 wt.%, and 1 ml of the diluted solution was dropped onto an aluminum plate (2 × 5 cm). After spin coating, then dried at 120°C for 10 minutes, thereby preparing a test piece.

For the prepared test pieces, the static contact angle (by a Sessile drop method) and the rolling angle (by a sliding method), which are indexes of water and oil repellent performance, were measured for water and n-hexadecane.

The results obtained are shown in the following Table 1.

**Table 1**

| | Static contact angle(°) | | Rolling angle(°) | |
|---|---|---|---|---|
| Example | Water | Hexadecane | Water | Hexadecane |
| Example 1 | 119 | 77 | 6 | 3 |
| Example 2 | 119 | 76 | 7 | 4 |
| Example 3 | 119 | 76 | 8 | 4 |
| Example 4 | 118 | 77 | 9 | 3 |
| Example 5 | 118 | 76 | 9 | 5 |
| Comparative Example 2 | 118 | 76 | 9 | 4 |
| Comparative Example 3 | 118 | 76 | 11 | 5 |
| Comparative Example 4 | 119 | 77 | 11 | 7 |

From the contact angle measurement results in Table 1 above, high water and oil repellency was confirmed in Examples 1 to 5. Further, the copolymers of Examples 1 to 5 had a significantly lower rolling angle for water and n-hexadecane compared with the copolymers obtained in Comparative Examples 2 to 4, and thus the liquid removal property was confirmed to be excellent.

### [Rust Resistance Evaluation]

The rust resistance evaluation was carried out by a salt spray test (JIS Z 2371). Aluminium, copper, or a SPCC test piece of 70 × 150 × 1.0 mm was used as the substrate, and dipped in a mixed solution (7:3 v/v) of C₄F₉OC₂H₅ and 1,3-bis(trifluoromethyl)benzene of each fluorine-containing copolymer to perform surface treatment on the test pieces. The resulting coated test pieces were regarded as unaltered. In addition, two scratches were made with a cutter on the coating film of the unaltered test piece in the diagonal direction of the test piece, and the resultant was regarded as cross-cut.

The appearance after salt spraying for 240 hours and 1000 hours was visually observed and evaluated as shown in Table 2 below.

### - Unaltered -

O: No rust occurred.
△: Spot rust occurred in several places.
× : Rust occurred in 10% or more of the observation area.

### - Cross-cut -

O: Spread of rust from the cut part was 2 mm or less at maximum.
△: Spread of rust from the cut part was less than 5 mm at maximum.
× : Spread of rust from the cut part was 5 mm or more at maximum.

The results obtained are shown in the following Table 2.

**Table 2**

| - Unaltered - | | | | | | | | | |
|---|---|---|---|---|---|---|---|---|---|
| Example | | Example 1 | Example 2 | Example 3 | Example 4 | Example 5 | Comparative Example 2 | Comparative Example 3 | Comparative Example 4 |
| SPCC | 240 hr | ○ | ○ | ○ | ○ | ○ | Δ | ○ | × |
| | 1000 hr | ○ | ○ | Δ | ○ | Δ | × | × | × |
| Aluminium | 240 hr | ○ | ○ | ○ | ○ | ○ | ○ | ○ | Δ |
| | 1000 hr | ○ | ○ | ○ | ○ | ○ | Δ | ○ | × |
| copper | 240 hr | ○ | ○ | ○ | ○ | ○ | ○ | ○ | Δ |
| | 1000 hr | ○ | ○ | Δ | ○ | Δ | Δ | ○ | × |

### - Cross-cut -

| Example | | Example 1 | Example 2 | Example 3 | Example 4 | Example 5 | Comparative Example 2 | Comparative Example 3 | Comparative Example 4 |
|---|---|---|---|---|---|---|---|---|---|
| SPCC | 240 hr | ○ | ○ | ○ | ○ | ○ | × | × | × |
| | 1000 hr | ○ | ○ | ○ | ○ | ○ | × | × | × |
| Aluminium | 240 hr | ○ | ○ | ○ | ○ | ○ | Δ | Δ | × |
| | 1000 hr | ○ | ○ | ○ | ○ | ○ | × | × | × |
| copper | 240 hr | ○ | ○ | ○ | ○ | ○ | × | × | × |
| | 1000 hr | ○ | ○ | ○ | ○ | ○ | × | × | × |

From the results of the salt spray test in Table 2 above, compared with the copolymers obtained in Comparative Examples 2 to 4, in the copolymers of Examples 1 to 5, almost no rust was observed even after the long-term test of 1000 hours, and thus confirming superior rust resistance.

Further, it was also confirmed that in the copolymer of Example 5, the spread of rust from scratches was suppressed, compared with the copolymers obtained in Comparative Examples 2 to 4.

### [Moisture Resistance Evaluation]

The moisture resistance was evaluated by moisture permeability (cup method, JIS Z 0208). A film was formed on a polyimide film, and the resulting film was peeled off to obtain an evaluation sample. The transparency (g/m²·24 H) of Example 1 was 190.

## Claims

1. A fluorine-containing copolymer , which is obtained by copolymerizing, as copolymer units,
(A) a polyfluoroalkyl (meth)acrylic acid ester represented by the general formula:
CₙF₂ₙ₊₁(CH₂CF₂)ₐ(CF₂CF₂)_{b}(CH₂CH₂)_{c}OCOCR=CH₂ [I]
wherein R is a hydrogen atom or a methyl group, n is an integer of 1 to 6, a is an integer of 1 to 4, b is an integer of 1 to 3, and c is an integer of 1 to 3;
(B) a (meth)acrylic acid ester represented by the general formula:
CH₂=CRCOOR¹ [II]
wherein R is a hydrogen atom or a methyl group, and R¹ is a C₁-C₃₀ linear, branched, or cyclic hydrocarbon group that may contain an oxygen atom;
(C) a functional group-containing (meth)acrylic acid or an ester thereof represented by the following general formula:
CH₂=CRCOO(H)ₚ(R²Y)_{q} [III]
wherein R is a hydrogen atom or a methyl group, p and q are 0 or 1, p + q is 1, R² is a C₁-C₃₀ linear, branched, or cyclic divalent hydrocarbon group that may have an oxygen atom, and Y is a phosphate group; and
(D) a polyfunctional (meth)acrylic acid ester represented by the following general formula:
CH₂ =CRCOOR³ OCOCR=CH₂ [IV]
wherein R is a hydrogen atom or a methyl group, R³ is a C₁-C₃₀ linear, branched, or cyclic divalent hydrocarbon group that may contain an oxygen atom,
at a ratio of 1 to 50 wt.% of the component (B), 0.01 to 5 wt.% of the component (C) and 0.01 to 2 wt.% of the component (D).

2. The fluorine-containing copolymer according to claim 1, which is further copolymerized with a fluorine-containing polymerizable monomer represented by the general formula:
CH₂=CRCOOR⁴(NR⁵SO₂)ₘRf [V]
wherein R is a hydrogen atom or a methyl group, R⁴ is a linear or branched alkylene group having 1 to 6 carbon atoms, R⁵ is a lower alkyl group having 1 to 4 carbon atoms, Rf is a perfluoroalkyl group having 1 to 6 carbon atoms, and m is 0 or 1.

3. The fluorine-containing copolymer according to claim 1 and 2, which is obtained by copolymerizing the polyfluoroalkyl alcohol (meth)acrylic acid derivative [I] or a combination thereof with the fluorine-containing polymerizable monomer [V], and the (meth)acrylic acids or esters thereof [III], [IV] and [IV] at a weight ratio of 1 to 99:99 to 1.

4. A coating composition comprising the fluorine-containing copolymer according to claim 1 or 2 and its solvent.

5. The coating composition according to claim 4, wherein the solvent is an organic solvent.

6. The coating composition according to claim 5, wherein the organic solvent is a fluorine-based solvent.

7. A substrate on which a surface modification film is formed from the coating composition according to any one of claims 4 to 6.

8. The substrate according to claim 7, wherein the surface modification film is water and oil repellent film.

9. The substrate according to claim 7, wherein the surface modification film is rust resistance film.

10. The substrate according to claim 7, wherein the surface modification film is waterproof • dampproof coating film.
